## Europäisches Patentamt

## European Patent Office

## Office européen des brevets

(19)

(11) Numéro de publication: **0 192 533**
**B1**

# FASCICULE DE BREVET EUROPEEN

(12)

(45) Date de publication du fascicule du brevet:
**08.11.89**

(51) Int. Cl.⁴: **E 21 B 33/138,** E 21 B 43/25,
C 09 K 7/00

(21) Numéro de dépôt: **86400203.5**

(22) Date de dépôt: **31.01.86**

(54) **Compositions de silicates alcalins et leurs emplois.**

(30) Priorité: **13.02.85 FR 8502034**

(43) Date de publication de la demande:
**27.08.86 Bulletin 86/35**

(45) Mention de la délivrance du brevet:
**08.11.89 Bulletin 89/45**

(84) Etats contractants désignés:
**DE FR GB IT NL**

(56) Documents cités:
**EP-A- 0 155 859**
**US-A- 3 493 406**
**US-A- 3 871 453**
**US-A- 4 293 440**

(73) Titulaire: **RHONE-POULENC CHIMIE, 25, quai Paul
Doumer, F-92408 Courbevoie Cédex (FR)**

(72) Inventeur: **Vinot, Bernard, 10, Avenue Notre-Dame,
F-06000 Nice (FR)**
Inventeur: **Berrod, Gérard, 75, Rue du 1er Mars,
F-69100 Villeurbanne (FR)**
Inventeur: **Brun, Jean-Louis, 55, Rue Vauban,
F-69006 Lyon (FR)**

(74) Mandataire: **Tavernier, Colette et al, RHONE-POULENC
INTERSERVICES Service Brevets Chimie 25, Quai Paul
Doumer, F-92408 Courbevoie Cédex (FR)**

ACTORUM AG

## Description

La présente invention a pour objet des compositions gélifiantes de silicates de métaux alcalins sous forme de microémulsions obtenues à l'aide d'un mélange de tensio-actifs.

L'invention concerne également l'emploi de ces microémulsions pour la consolidation des sols et pour le colmatage de formations géologiques de surface et souterraines.

On sait que par addition aux silicates alcalins de certains réactifs organiques, on peut obtenir des gels de silice susceptibles de se transformer en une masse cohérente et dure présentant les caractéristiques d'un ciment. Parmi les nombreux réactifs préconisés, on connaît notamment les esters organiques qui en présence de silicates s'hydrolysent et relachent un composé acide pour former un gel imperméable à l'eau. Des esters de diacides particulièrement intéressants pour l'étanchement et la consolidation des sols on été décrits dans le brevet américain US-A 3 493 406. Le choix du ou des esters particuliers peut dépendre du temps de gélification souhaité dans l'application visée, donc de la vitesse d'hydrolyse des esters dans les conditions de température qui seront rencontrées.

Cependant certains esters présentent l'incouvénient d'être peu solubles dans l'eau, ce qui nécessite une agitation énergique préalable à l'injection pour avoir un mélange homogène qui gélifie uniformément.

L'emploi de silicates pour réduire ou supprimer la perméabilité des formations souterraines dans le traitement des puits est également connu dans la technique. Des procédés de colmatage permanent ou temporaire sont utilisés notamment dans les opérations de forage, de reconditionnement, de complétion, de stimulation de puits et de récupération tertiaire. Les silicates ont été préconisés par exemple comme additif à des mélanges de ciment ou à des résines pour boucher les zones à perte de circulation importante lors du forage ou pour éviter la communication entre plusieurs couches du réservoir lors de la cimentation des «casings». Les silicates sont également mis en œuvre en fracturation afin d'obtenir des gels visqueux ayant des propriétés thioxotropiques. Dans ces opérations, les silicates sont employés essentiellement comme additif sans réactif gélifiant. Sous forme de gel, les silicates ont été utilisés dans les opérations de récupération tertiaire pour boucher les zones à haute perméabilité afin d'empêcher des venues d'eau trop importantes dans le puits producteur. Les gels de silicates employés jusqu'à présent dans l'industrie pétrolière sont destinés à former des colmatages permanents. Cependant, l'injection d'une solution ou émulsion de silicates alcalins dans un milieu poreux présente certaines difficultés: propagation lente, risques de phénomènes de séparation conduisant à un colmatage non homogène. Lorsque l'on désire obtenir des colmatages temporaires et reversibles, on fait appel, selon l'art connu, à des solutions de polymères organiques. Ces procédés ont pour inconvénients d'être peu sûrs quant à la tenue en température et à la longévité du colmatage; de plus, la destruction du gel polymère est souvent difficile à maîtriser et conduit à des perméabilités résiduelles inférieures aux perméabilités initiales.

La présente invention a pour but de résoudre ces problèmes et de fournir des compositions utilisables pour l'étanchement et la consolidation des sols aussi bien que pour le colmatage permanent ou reversible de formations souterraines qui soient stables, de mise en œuvre facile, qui se propagent facilement en milieu poreux et qui conduisent à la formation d'un gel homogène, le dit gel étant insensible à l'eau, à l'huile et aux fluides de forage ou de traitement et est résistant aux températures élevées pouvant être rencontrées dans les formations souterraines, (jusqu'a environ 200 °C).

L'invention a encore pour but de proposer des compositions utilisables dans des procédés de colmatage reversible de zones pétrolifères dans lesquels les durées de colmatage et de destruction du gel peuvent être parfaitement maîtrisées en un temps contrôlé et qui permettent d'obtenir une perméabilité résiduelle sensiblement équivalente à la perméabilité initiale après un balayage limité en volume par l'agent destructeur.

Les compositions de silicates alcalins selon l'invention sont à base d'un silicate de métal alcalin en solution aqueuse, d'un gélifiant et d'un agent tensio-actif. Elles sont caractérisées en ce qu'elles se présentent sous forme de microémulsions et en ce que l'agent tensio-actif est un système constitué d'un mélange d'alkylsulfoesters des acides en $C_4-C_{30}$ et d'alkyl et/ou alcénylsulfonates alcalins.

Les microémulsions et les principes de base de leur formation sont connues. Ce sont des systèmes thermodynamiquement stables de micelles d'un liquide dispersé dans une phase liquide continue, les deux liquides étant non miscibles (MICROEMULSIONS – Theory and Practice – Edited by Leon M. Prince – Academic Press – 1977).

Dans les microémulsions selon l'invention, la phase aqueuse est constituée par une solution de silicate alcalin et la phase organique (huile) est constituée par l'agent gélifiant.

Les silicates peuvent être des silicates ou polysilicates d'un ou plusieurs métaux alcalins, de préférence de sodium, dans lesquels le rapport molaire $SiO_2/M_2O$ est compris entre 2 et 5 (M = métal alcalin). On peut utiliser des mélanges de silicates de rapport molaire différent et/ou de métal alcalin différent.

La concentration en silicate dans la solution aqueuse est déterminée de manière à avoir généralement un taux de 1,5 à 25% en poids de silice par rapport au volume total de la solution.

En tant qu'agent gélifiant du silicate, on peut employer tout composé de type connu hydrolysable dans les conditions d'emploi. Parmi les composés utilisables sont inclus les esters alkyliques des acides monocarboxyliques, dicarboxyliques ou polycarboxyliques aliphatiques saturés ou insaturés; les esters alkyliques des acides carboxyliques carbocycliques; les phosphates de dialkyle et/ou de trialkyle; les lactones; les alkylamides inférieurs; les cetoesters. Le réactif gélifiant peut être choisi plus particulièrement parmi les diesters alkyliques des diacides aliphatiques en $C_2-C_{10}$ dans lesquels le groupe alkyle contient 1 à 6 atomes de carbone et leurs mélanges entre eux; les diesters alkyliques des acides phtaliques dans lesquels le groupe alkyle contient 1 à 6 atomes de carbone et leurs melanges entre eux; les phosphates de dialkyle et/ou de trialkyle dans lesquels le groupe alkyle contient 1 à 6 atomes de carbone, et leurs mélanges entre eux.

Des agents gélifiants particulièrement appropriés sont représentés par les diesters des diacides aliphatiques en $C_4-C_6$ avec un groupe alkyle en $C_1-C_6$ et notamment les succinate, glutarate et adipate de diméthyle, de diéthyle, de di-n-propyle, de diisopropyle, de diisobutyle.

L'agent gélifiant peut être constitué par un mélange de diesters des acides précités possédant tous les mêmes groupes alcoyles ou par un mélange de diesters possédant des groupes alcoyles différents. Le ou les diesters peuvent être utilisés en mélange avec d'autres réactifs gélifiants de type connu tels que par exemple l'acétate d'ethyle, l'acétate d'éthyglycol, la diacétine, la triacétine etc.

Les proportions relatives de l'agent gélifiant et du silicate alcalin peuvent varier entre 25 et 100 fonctions équivalentes de gélifiant pour 100 fonctions équivalentes d'alcalinité apportée par le silicate, soit un coefficient de neutralisation allant de 0,25 à 1, de préférence 0,4 à 0,8.

A l'intérieur de ces paramètres, la formulation spécifique (rapport $SiO_2/M_2O$, nature du durcisseur, coefficient de neutralisation, taux de dilution) sera déterminée dans chaque cas particulier en fonction de la température et de la pression recontrées dans le sol ou dans la formation rocheuse de manière à régler la dureté du gel et un temps de prise convenable qui peut être compris entre environ 15 minutes et 20 heures ou plus à une température de 20 à 200 °C.

En consolidation des sols, il est généralement désirable que les temps de prise ne soient pas inférieurs à 10−15 minutes ni supérieurs à 1 heure. Lorsque la composition est destinée au colmatage de zones profondes, il peut être souhaitable de choisir les formulations de manière à avoir un temps de prise égal ou supérieur à environ 3 heures.

Selon l'invention le système tensio-actif est représenté par les alkylsulfoesters des acides en $C_4-C_{30}$ de formule $R_1 OOC-(CH_2)_n - CH(SO_3Na)-COOR_2$, en mélange avec les alkyl- et/ou alcenyl-sulfonates alcalins et tout particulièrement le mélange de dihexyle sulfosuccinate de sodium et de α oléfine ($C_{16}-C_{20}$) sulfonate de sodium.

Le système tensio-actif susceptible de convenir à la réalisation de la microémulsion selon l'invention peut être déterminé en calculant le nombre équivalent de carbones alcanes (EACN) de l'agent gélifiant, utilisant le loi de SALAGER Log S = k (EACN) dans laquelle S est la salinité correspondant à la force ionique de la solution de silicate. La valeur (EACN) oriente le choix du système tensio-actif. On diminuera le caractère hydrophobe (on augmentera le caractère hydrophile) du système tensio-actif pour mettre en microémulsion un durcisseur de faible (EACN). Inversement, on augmentera la caractère hydrophobe (on diminuera le caractère hydrophile) du système tensio-actif pour mettre en microémulsion un durcisseur de (EACN) élevé. La consistance du gel désiré donnée par la concentration en silicates imposera au milieu une force ionique, condition supplémentaire à laquelle le système tensio-actif devra satisfaire, conformément à la loi de SALAGER.

Par exemple, pour microémulsionner une solution de silicate et un durcisseur de faible EACN, on utilisera un système tensio-actif anionique de valeur HLB élevée, c'est-à-dire un système dont les constituants présentent une chaîne hydrocarbonée courte et/ou peu ou pas ramifiée.

Si l'on veut microémulsionner une solution de silicate et un durcisseur de fort EACN, on utilisera un système dont les constituants présentent une chaîne hydrocarbonnée plus longue et plus ramifiée.

On peut encore ajouter aux microémulsions selon l'invention, des agents dispersants comme la colophane, la colophane hydrogénée, la colophane dismutée et leurs savons alcalins, les esters de colophane.

La quantité de système tensio actif peut être de l'ordre de 0,3 à 15% en poids de matière active par rapport au poids de la micro-émulsion.

Les microémulsions de silicates selon l'invention conviennent à toutes les applications générales d'étanchement et de consolidation de sols et formations géologiques. Elles sont d'une manipulation facile et peuvent être injectées dans des terrains particulièrement denses ou dans des formations rocheuses finement poreuses grâce à leur faible viscosité initiale, voisine de celle de l'eau. Elles gardent leur fluidité et leur limpidité jusqu'à ce que le taux d'hydrolyse de l'ester soit suffisant pour amorcer la prise du gel. La viscosité augmente alors rapidement jusqu'à obtention d'un gel très consistant.

Ces microémulsions alcalines sont d'un intérêt tout particulier pour colmater temporairement ou définitivement une formation souterraine pénétrée par un puits de forage: absence de corrosion des installations, bonne propagation dans une formation poreuse due à la basse tension de surface, contrôle de la viscosité du gel et du temps de prise, longévité cu colmatage, reversibilité du traitement.

Dans un aspect particulier de l'invention, les microémulsions sont utilisées dans un procédé de colmatage temporaire selon lequel on injecte dans la formation, une microémulsion d'une solution aqueuse de silicate de métal alcalin, d'un agent gélifiant et d'au moins un agent tensio-actif, on laisse gélifier la composition et on maintient le gel pendant le temps désiré pour le colmatage, puis on injecte une solution aqueuse alcaline, de manière à détruire le gel.

La microémulsion peut être injectée dans la formation par tous moyens connus. Après gélification et durcissement, la perméabilité de la formation est réduite à une valeur suffisamment faible pour étanchéifier la dite formation à l'eau, à l'huile et aux fluides de forage et de traitement tout en permettant la pénétration ultérieure d'une solution alcaline dans les conditions de température et pression utilisées.

La perméabilité de la formation après colmatage est favorablement réduite à une valeur comprise généralement entre 1 et 10 millidarcys qui est fonction de la formulation spécifique choisie.

Le procédé dans lequel le colmatage à l'aide des microémulsions de silicates selon l'invention est détruit peut être expliqué par la contraction volumétrique du gel dans la roche. Ce phénomène est appelé communément synérèse. Selon la formulation de la microémulsion (notamment la concentration en silicates) et la température du milieu, on peut obtenir des synérèses allant de 0 à 95%, la synérèse totale pouvant n'être obtenue qu'après plusieurs mois.

Ainsi, le choix de la formulation permet de fournir des systèmes de colmatage permanent ou définitif et des systèmes de contrôle de perméabilité. En mettant en œuvre des microémulsions à très forte synérèse, de l'ordre de 60–80%, on peut consolider une structure friable en conservant une perméabilité aux hydrocarbures ou fluides de balayage.

Lorsque le décolmatage est nécessaire, on procède à l'injection d'une solution alcaline (soude, potasse ou lithine) dont la concentration peut être comprise entre 2 et 20%. Cette solution, injectée sous pression, pénètre lentement dans la roche dont la perméabilité résiduelle n'est pas totalement nulle, et dissout le gel au fur et à mesure de son avancement. Le temps de destruction du gel dépend de l'épaisseur de la couche traitée, de la formulation initiale du gel et des conditions du gisement. La solution obtenue après dissolution du gel ne contient pas de particules solides ni de précipités colmatants, ce qui permet de restaurer la perméabilité initiale de la zone productrice.

Selon un mode de mise en œuvre particulier, il peut être utile, en fonction de la nature du gisement, de procéder à une pré-injection de la zone à traiter à l'aide d'une solution alcaline, par exemple une solution de soude, de concentration comprise entre $10^{-3}$ et 2 moles par litre. Ce front de soude, devant le colmatage, permet de s'assurer de la parfaite dissolution du gel lors du décolmatage par un maintien de la zone traitée à pH élevé.

Le procédé de colmatage temporaire être appliqué notamment dans des opérations de forage, de reconditionnement de puits et de récupération tertiaire. En cours de forage, les pertes de circulation de boues nécessitent en colmatage rapide et efficace qui, de manière conventionnelle, est effectué à l'aide de mélanges de ciments ou de résines. Selon le procédé de l'invention on injecte la composition aqueuse contenant le silicate et l'agent gélifiant à l'intérieur des zones à perte de circulation, on laisse gélifier de silicate, et après conditionnement du puits, on injecte par l'intermédiaire de la tige une solution alcaline de manière à détruire le gel. Contrairement aux procédés de l'art antérieur, le procédé selon l'invention permet de récupérer totalement la zone colmatée afin de tester cette zone (zone à huile ou à eau).

Le procédé est également applicable pour le forage de multiples zones productrices. Conventionnellement, lors du forage d'une zone productrice, afin de ne pas endommager cette zone, on procède à un changement de boue, moins contaminant mais moins efficace. Le procédé selon l'invention peut être mis en œuvre pour colmater temporairement cette zone, de manière à continuer le forage vers une autre zone productrice, la même boue pouvant être utilisée. Après destruction du gel, la zone productrice est récupérée.

Dans une application traitement de puits où l'on veut colmater temporairement une zone de gisement, l'injection d'une microémulsion selon l'invention permet, grâce aux propriétés de basse tension interfaciale entre la microémulsion et l'huile, de déplacer l'huile située dans cette zone en maintenant un très bon colmatage.

Le procédé de colmatage temporaire est encore applicable dans les opérations de reconditionnement de puits de production. Les fluides de reconditionnement utilisés pour «tuer» le puits font en général beaucoup de dégats: réduction de la perméabilité absolue de la formation et de sa perméabilité relative à l'huile, augmentation de la viscosité du fluide de réservoir. Il est donc utile de protéger la zone productrice. Dans le cas de complétion multiple, il peut être nécessaire d'isoler des zones de pression différente. Le colmatage temporaire par le procédé de l'invention permet d'isoler efficacement la ou les zones productrices, puis, après destruction du gel, de remettre le ou les réservoirs en production, en restaurant la perméabilité initiale de la roche.

Les microémulsions peuvent encore être mises en œuvre dans les procédés de récupération d'huile, à partir de réservoirs par injection d'eau (waterflooding). Au cours de cette opération, les différences de perméabilité ont une grande importance quant à l'efficacité de la récupération. L'eau injectée vers le puits producteur chemine préférentiellement à travers les zones de haute perméabilité, au détriment des zones de basse perméabilité en créant plus ou moins rapidement une arrivée d'eau («breakthrough») dans le réservoir d'huile à faible perméabilité. Afin d'éviter ce phénomène, selon un mode de mise en œuvre particulier du procédé de l'invention, une microémulsion de silicate est injecté à travers un puits d'injection en quantité suffisante pour pénétrer dans les zones les plus perméables de la formation en créant un colmatage sélectif de ces zones; après la prise du gel, une solution alcaline est injectée par le puits d'injection pour détruire le gel jusqu'à obtention d'un «breakthrough» de solution alcaline dans la zone de faible perméabilité; enfin l'injection d'eau (waterflooding) est reprise pour pousser l'huile vers un ou plusieurs puits

producteurs. La quantité de solution alcaline à injecter peut être contrôlée en surface par la chute de pression dès qu'un «breakthrough» se produit. Le procédé a pour effet de rectifier le profil de balayage de l'eau et de l'huile, avec une diminution de la production d'eau et une augmentation de la production en huile. Par ailleurs, le front de solution alcaline de silicate après destruction du gel, permet de former des surfactants in situ, de baisser les tensions superficielles et de reduire l'adsorption des surfactants, d'où il résulte un balayage plus efficace et une récupération en huile améliorée.

L'invention est illustrée par les exemples suivants, donnés à titre non limitatif.

Exemple 1

On prépare des microémulsions selon les formulations données dans le Tableau 1, de la manière suivante:

On introduit, sous agitation, les deux tensioactifs dans l'eau. On ajoute le silicate, puis le durcisseur (ester).

On poursuit l'agitation pendant une durée comprise entre 0 et 10% du temps de prise, jusqu'à l'obtention d'une solution limpide.

Dans tous les essais, le silicate de soude est une solution aqueuse à 41° Baumé, de rapport $SiO_2/Na_2O$ égal à 3,22. Le système tensio-actif est un mélange de dihexylsulfosuccinate de sodium en solution aqueuse à 80% (Aerosol MA 80 commercialisé par American Cyanamid) et de sulfonate d'$\alpha$ oléfine en $C_{16-20}$ en solution aqueuse à 30% ($C_{18}$ $\alpha$ oléfine sulfonates commercialisé par Ethyl Corporation).

On donne comme résultats:

a) le temps de prise à diverses températures: on mesure la viscosité en fonction du temps. Le temps de prise est défini par le point auquel la vitesse d'accroissement de la viscosité est infini.

b) la résistance à la compression $R_c$ d'une éprouvette de sable de Fontainebleau préalablement injectée à l'aide de la microémulsion, après 5 jours à 25°C ou 60°C.

Comparativement, on donne les valeurs $R_c$ obtenues avec des compositions non microémulsionnées comprenant le même silicate et le même durcisseur, avec un seul tensio-actif et en l'absence de tensio-actif.

Exemple 2

On prépare des microémulsions selon les formulations données dans le Tableau 2. Le durcisseur utilisé est un mélange de succinate, glutarate et adipate de diéthyle (Durcisseur 600 NDE – Rhône-Poulenc Spécialités Chimiques).

Toutes les microémulsions ont été préparées à force ionique constante pour permettre une meilleure comparaison des temps de prise.

On a pris comme référence la force ionique de la microémulsion réalisée avec 25% v/v de silicate. Lorsque l'on a diminué la quantité de silicate, on a rajouté du chlorure de sodium pour compenser le défaut de force ionique.

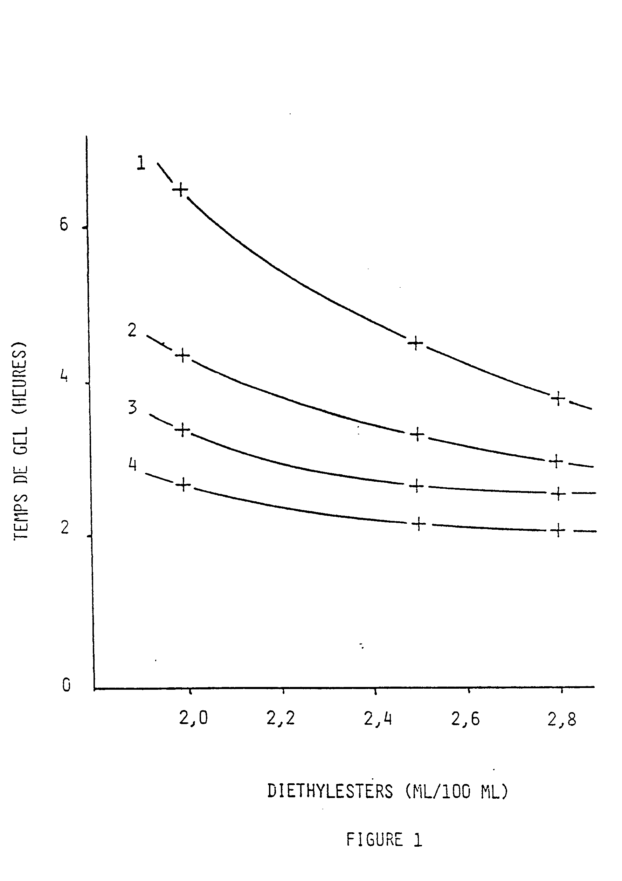

La variation des temps de prise, mesurés à 25°C, en fonction de la concentration en durcisseur est portée sur la Figure 1.

Exemple 3

On prépare des microémulsions selon les formulations données dans le Tableau 3 en utilisant comme durcisseur un mélange de succinate, glutarate et adipate de n.dipropyle.

Comme dans l'exemple 2, certaines microémulsions comportent du chlorure de sodium pour conserver la force ionique constante.

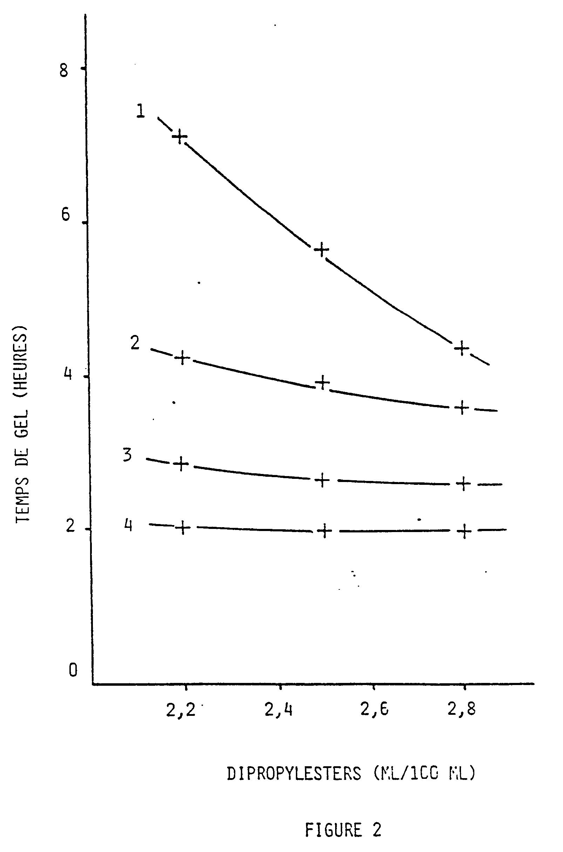

La variation des temps de prise, mesurés à 60°C, en fonction de la concentration en durcisseur est portée sur la Figure 2.

Exemple 4

On prépare une microémulsion ayant la composition suivante, exprimée en % poids/poids:

| | |
|---|---|
| Silicate de soude (41° B) | 34,2% |
| Phtalate de méthyle | 2,9% |
| Dihexyle sulfosuccinate de sodium (à 80%) | 2,8% |
| $\alpha$ Oléfine sulfonate de sodium (à 30%) | 3,7% |
| Eau | 56,4% |

Le temps de prise est de 3 heures à 60°C
$R_c = 5$ bars
La $R_c$ d'une composition témoin non microémulsionnée (pas d'agents tensio-actifs) est inférieure à 1 bar.

Exemple 5

On prépare une microémulsion ayant la composition suivante, en % p/p:

| | |
|---|---|
| Silicate de soude (41° B) | 27,1% |
| Durcisseur | 4,95% |
| Dihexylsulfosuccinate de sodium (à 80%) | 8,35% |
| $\alpha$ Oléfine sulfonate de sodium (à 30%) | 10,6% |
| Eau | 49,0% |

Le durcisseur est un mélange 20/20/60 d'adipate, succinate et glutarate d'isobutyle.
Le temps de prise est de 40 heures à 60°C.

Exemple 6

On prépare un microémulsion ayant la composition suivante, en % p/p:

| | |
|---|---|
| Silicate de sodium (41° B) | 37,0% |
| Durcisseur 600 NDE | 2,75% |
| Dihexylsulfosuccinate de sodium (à 80%) | 2,75% |
| $\alpha$ oléfine sulfonate de sodium (à 30%) | 4,85% |
| Eau | 52,65% |

Le temps de prise est de 1 h 45 à 60°C.
On utilise une carotte en grès de Berea (longueur 10,2 cm – diamètre 3,9 cm) ayant une perméabilité mesurée à l'air de 610 mD, une perméabilité à l'eau de 450 mD. La carotte saturée au fuel domestique a une perméabilité de 250 mD. Après désaturation à l'eau, la perméabilité à l'eau est de 45 mD. La carotte est saturée à nouveau au fuel puis désaturée avec une solution aqueuse de soude à 4% (preflush).

On injecte, à 25 °C, 5 volumes poreux (VP) de la microémulsion à travers la carotte. Le temps de prise de la microémulsion après passage à travers la carotte est encore de 1 H 50 à 60 °C (pas de démixion ni absorption dans la roche).

La carotte est portée à 60 °C. La perméabilité résiduelle au fuel, mesuré après 16 heures est de 8 mD.

On décolmate la roche à l'aide d'une solution de soude à 8% â 60 °C sous une pression initiale de 3 bars. Après avoir passé 5 VP en 24 heures, la perméabilité au fuel est de 227 mD. Après désaturation à l'eau, la perméabilité est de 36 mD. Après lavage de la carotte par un solvant organique (Baltane, acétone) et dégazage sous vide, la perméabilité à l'air est de 440 mD.

## Tableau 1

| Ester | | Silicate | Tensio-actif DHSS* | Tensio-actif AOS* | Temps de prise | | Rc |
| Nature | g/l | (en sec) g/l | g/l | g/l | T°(°C) | mn | (bars) |
|---|---|---|---|---|---|---|---|
| Diméthyladipate | 30,4 | 130 | 15 | 20 | 25 | 120 | 3,7 |
| Diméthyladipate | 30,4 | 130 | – | – | 25 | | < 0,12 |
| Diméthyladipate | 30,4 | 130 | – | 40 | 25 | | < 0,3 |
| Diéthylsuccinate | 29,9 | 130 | 15 | 20 | 25 | 210 | 3,9 |
| Diéthylglutarate | 28,4 | 130 | 15 | 20 | 25 | 375 | 2,2 |
| Diéthylglutarate | 28,4 | 100 | 14 | 10 | 60 | 38 | 1,6 |
| Diéthyladipate | 27,9 | 100 | 14 | 17 | 60 | 79 | 0,8 |
| Diéthyladipate | 27,9 | 100 | – | – | 60 | | < 0,3 |
| Diéthyladipate | 27,9 | 100 | – | 35 | 60 | | < 0,8 |
| | | | | | 70 | 55 | |
| Dipropylsuccinate | 31,8 | 100 | 16 | 27 | 60 | 275 | |
| | | | | | 70 | 170 | |
| Dipropylglutarate | 30,5 | 100 | 16 | 27 | 60 | 390 | |
| | | | | | 70 | 225 | |

* DHSS = Dihexylsulfosuccinate de sodium (Aérosol MA 80 – American Cyanamid C°)
AOS = $C_{18}$ α olefin sulfonate (Ethyle Corporation)

## Tableau 2

| N° de la courbe | Silicate de soude* % v/v | Durcisseur % v/v | Tensio actif 1 % v/v | Tensio actif 2 % v/v | Chlorure de sodium % p/v | Eau % v/v |
|---|---|---|---|---|---|---|
| 1 | 25 | 2,8 | 2,8 | 3,7 | 0 | 65,7 |
| | 25 | 2,5 | 2,8 | 3,7 | 0 | 66 |
| | 25 | 2,0 | 2,8 | 3,7 | 0 | 66,5 |
| 2 | 20 | 2,8 | 2,8 | 3,7 | 0,55 | 70,15 |
| | 20 | 2,5 | 2,8 | 3,7 | 0,55 | 70,45 |
| | 20 | 2,0 | 2,8 | 3,7 | 0,55 | 70,95 |
| 3 | 15 | 2,8 | 2,8 | 3,7 | 1,1 | 74,6 |
| | 15 | 2,5 | 2,8 | 3,7 | 1,1 | 74,9 |
| | 15 | 2,0 | 2,8 | 3,7 | 1,1 | 75,4 |
| 4 | 10 | 2,8 | 2,8 | 3,7 | 1,6 | 79,1 |
| | 10 | 2,5 | 2,8 | 3,7 | 1,6 | 79,4 |
| | 10 | 2,0 | 2,8 | 3,7 | 1,6 | 79,9 |

* Silicate = solution à 41° Bé – $SiO_2/Na_2O$ = 3,3
Tensio actif 1: dihexylsulfosuccinate de sodium (Aérosol MA 80 American Cyanamid C°)
Tensio actif 2: C 18 α olefin sulfonate (Ethyle Corporation)

Tableau 3

| N° de la courbe | Silicate de soude* % v/v | Durcisseur % v/v | Tensio actif 1 % v/v | Tensio actif 2 % v/v | Chlorure de sodium % p/v | Eau % v/v |
|---|---|---|---|---|---|---|
| 1 | 25 | 2,8 | 2,5 | 3,4 | 0 | 66,3 |
|   | 25 | 2,5 | 2,5 | 3,4 | 0 | 66,6 |
|   | 25 | 2,2 | 2,5 | 3,4 | 0 | 66,9 |
| 2 | 20 | 2,8 | 2,5 | 3,4 | 0,55 | 70,75 |
|   | 20 | 2,5 | 2,5 | 3,4 | 0,55 | 71,05 |
|   | 20 | 2,2 | 2,5 | 3,4 | 0,55 | 71,35 |
| 3 | 15 | 2,8 | 2,5 | 3,4 | 1,1 | 75,2 |
|   | 15 | 2,5 | 2,5 | 3,4 | 1,1 | 75,5 |
|   | 15 | 2,2 | 2,5 | 3,4 | 1,1 | 75,8 |
| 4 | 10 | 2,8 | 2,5 | 3,4 | 1,6 | 79,7 |
|   | 10 | 2,5 | 2,5 | 3,4 | 1,6 | 80 |
|   | 10 | 2,2 | 2,5 | 3,4 | 1,6 | 80,3 |

* Silicate = solution à 41° Bé – $SiO_2/Na_2O$ = 3,3
  Tensio actif 1: dihexylsulfosuccinate de sodium (Aérosol MA 80 American Cyanamid C°)
  Tensio actif 2: C 18 α olefin sulfonate (Ethyle Corporation)

## Revendications

1. Compositions de silicates alcalins à base d'un silicate de métal alcalin en solution aqueuse, d'un agent gélifiant et d'un agent tensio-actif caractérisées en ce que lesdites compositions sont des microémulsions et en ce que l'agent tensio-actif est un système constitué d'un mélange d'alkylsulfoesters des acides en $C_4-C_{30}$ et d'alkyl et/ou alcenylsulfonates alcalins.

2. Compositions selon la revendication 1, caractérisées en ce que le rapport molaire $SiO_2/M_2O$ est compris entre 2 et 5.

3. Compositions selon la revendication 1, caractérisées en ce que le taux de silice est compris entre 1,5 et 25% en poids par rapport au volume de la solution aqueuse.

4. Compositions selon l'une des revendications 1 à 3, caractérisées en ce que l'agent gélifiant est choisi dans le groupe des esters alkyliques des acides monocarboxyliques, dicarboxyliques, polycarboxyliques aliphatiques saturés ou insaturés; des esters alkyliques des acides carboxyliques carbocycliques; des phosphates de dialkyle et/ou trialkyle; des lactones; des alkylamides inférieurs; des cetoesters.

5. Compositions selon la revendication 4, caractérisées en ce que l'agent gélifiant est choisi parmi les diesters alkyliques des diacides en $C_2-C_{10}$ dans lesquels le groupe alkyle contient 1 à 6 atomes de carbone, et leurs mélanges entre eux.

6. Compositions selon la revendication 4, caractérisées en ce que l'agent gélifiant est choisi parmi les diesters alkyliques des acides phtaliques dans lesquels le groupe contient 1 à 6 atomes de carbone, et leurs mélanges entre eux.

7. Compositions selon l'une des revendications 1 à 6, caractérisées en ce que les proportions du silicate et de l'agent gélifiant sont comprises entre 25 et 100 fonctions équivalentes de gélifiant pour 100 fonctions équivalentes d'alcalinité du silicate.

8. Compositions selon l'une des quelconque des revendications 1 à 7, caractérisées en ce que le système tensio-actif est un mélange de dihexyle sulfosuccinate de sodium et de α oléfine sulfonate de sodium.

9. Utilisation des compositions selon l'une des revendications 1 à 8 pour l'étanchement et la consolidation des sols et formations géologiques.

10. Utilisation des compositions selon l'une des revendications 1 à 8 pour le colmatage temporaire ou définitif d'une formation souterraine pénétrée par un puits de forage.

11. Utilisation des compositions selon l'une des revendications 1 à 8 pour le colmatage temporaire d'une formation souterraine selon lequel on injecte dans la formation une microémulsion constituée d'une solution aqueuse de silicate de métal alcalin, d'un agent gélifiant et d'un système tensio-actif, on laisse gélifier la composition et on maintient le gel pendant le temps désiré pour le colmatage, puis on injecte une solution aqueuse alcaline de manière à détruire le gel.

## Patentansprüche

1. Alkalisilicate auf der Basis einer wäßrigen Lösung eines Alkalisilicats eines Geliermittels und eines oberflächenaktiven Mittels, gekennzeichnet durch eine Mikroemulsion, in der das oberflächenaktive Mittel ein System aus einem Gemisch von Alkylsufosäureester von $C_4-C_{30}$ Säuren und Alkalialkyl- und/oder Alkalialkenylsulfonat ist.

2. Alkalisilicat nach Anspruch 1, gekennzeichnet durch ein Molverhältnis $SiO_2/M_2O$ von 2 bis 5.

3. Alkalisilicat nach Anspruch 1, gekennzeichnet durch einen Kieselsäuregehalt von 1,5 bis 25 Gew.-%, bezogen auf das Volumen der wäßrigen Lösung.

4. Alkalisilicat nach Anspruch 1 bis 3, dadurch gekennzeichnet, daß das Geliermittel ausgewählt ist aus Alkylestern von Monocarbonsäuren, Dicarbonsäuren, gesättigten und ungesättigten Polycarbonsäuren; den Alkylestern von aromatischen Carbonsäuren; Dialkylphosphaten; Trialkylphosphaten; Lactonen; inneren Alkylamiden und Ketoestern.

5. Alkalisilicat nach Anspruch 4, dadurch gekennzeichnet, daß das Geliermittel ausgewählt ist aus den Alkyldiestern von $C_2-C_{10}$ Dicarbonsäuren, wobei die Alkylgruppe 1 bis 6 Kohlenstoffatome enthält, und deren Gemische.

6. Alkalisilicat nach Anspruch 4, dadurch gekennzeichnet, daß das Geliermittel ausgewählt ist aus Alkyldiestern der Phthalsäuren, worin die Alkylgruppe 1 bis 6 Kohlenstoffatome enthält, und deren Gemischen.

7. Alkalisilicat nach Anspruch 1 bis 6, dadurch gekennzeichnet, daß auf 100 Äquivalente Alkalinität des Silicats 25 bis 100 Äquivalente Geliermittel kommen.

8. Alkalisilicat nach einem der vorhergehenden Ansprüche 1 bis 7, dadurch gekennzeichnet, daß das oberflächenaktive System ein Gemisch ist aus Natriumverbindungen von Dihexylsulfonsuccinat und α-Olefinsulfonat.

9. Verwendung der Produkte nach Anspruch 1 bis 8 zum Wasserdichtmachen und Verfestigen der Böden und geologischen Formationen.

10. Verwendung der Produkte nach Anspruch 1 bis 8 zur zeitweisen oder definitiven Abdichtung unterirdischer Formationen, die von Bohrungen durchdrungen sind.

11. Verwendung der Produkte nach Anspruch 1 bis 8 für die zweitweise Abdichtung unterirdischer Formationen, wozu man in die Formation eine Mikroemulsion injiziert, bestehend aus einer wäßrigen Lösung von Alkalisilicat, einem Geliermittel und einem oberflächenaktiven System, indem man die Masse gelieren läßt und das Gel für die Abdichtung bestehen bleibt, wonach man eine wäßrige alkalische Lösung zur Zerstörung des Gels injiziert.

**Claims**

1. Compositions of alkaline silicates based on an alkali-metal silicate in aqueous solution, a gelling agent and a surface active agent characterised in that they are in the form of microemulsions and that the surface active agent is a system formed by a mixture of alkylsulphoesters of $C_4-C_{30}$ acids and alkaline alkyl and/or alkenylsulphonates.

2. Compositions according to claim 1 characterised in that the molar ratio $SiO_2/M_2O$ is between 2 and 5.

3. Compositions according to claim 1 characterised in that the proportion of silica is between 1.5 and 25% by weight with respect to the volume of the aqueous solution.

4. Compositions according to one of claims 1 to 3 characterised in that the gelling agent is selected from the group of alkyl esters of saturated or unsaturated aliphatic monocarboxylic, dicarboxylic and polycarboxylic acids; alkyl esters of carbocyclic carboxylic acids; dialkyl and/or trialkyl phosphates; lactones; lower alkyl amides; and ketoesters.

5. Compositions according to claim 4 characterised in that the gelling agent is selected from alkyl diesters of $C_2-C_{10}$ diacids in which the alkyl group contains from 1 to 6 carbon atoms, and mixtures thereof.

6. Compositions according to claim 4 characterised in that the gelling agent is selected from alkyl diesters of phthalic acids in which the alkyl group contains from 1 to 6 carbon atoms, and mixtures thereof.

7. Compositions according to one of claims 1 to 6 characterised in that the proportions of the silicate and the gelling agent are between 25 and 100 equivalent functions of gelling agent for 100 equivalent functions of alkalinity of the silicate.

8. Compositions according to any of claims 1 to 7 characterised in that the surface active system is a mixture of sodium dihexylsulphosuccinate and sodium α-olefin sulphonate.

9. Use of the compositions according to one of claims 1 to 8 for sealing off and consolidating ground and geological formations.

10. Use of the compositions according to one of claims 1 to 8 for temporary or definitive cementation of an underground formation through which a drilling well passes.

11. Use of the compositions according to one of claims 1 to 8 for the temporary cementation of an underground formation wherein a microemulsion formed by an aqueous solution of alkali metal silicate, a gelling agent and a surface active system is injected into the formation, the composition is left to gel and the gel is maintained for the period of time desired for the cementation effect, then an alkaline aqueous solution is injected so as to destroy the gel.

FIGURE 1

FIGURE 2